# EUROPEAN PATENT APPLICATION

(11) **EP 4 160 103 A1**
(43) Date of publication of application: **05.04.2023**
(21) Application number: 20938130.0
(22) Date of filing: 28.05.2020
(51) Int. Cl.: F24F 11/58

(54) **AIR CONDITIONING SYSTEM, AIR CONDITIONER, MANAGEMENT SERVER, AUTHENTICATION INFORMATION PROVIDING METHOD AND PROGRAM**

(71) Applicant: MITSUBISHI ELECTRIC CORPORATION, Chiyoda-ku Tokyo 100-8310 (JP)
(72) Inventor: ITO Masatoshi, Tokyo 100-8310 (JP)
(74) Representative: Studio Torta S.p.A.
(86) International application number: PCT/JP2020/021169
(87) International publication number: WO 2021/240745

(57) **Abstract**

An air-conditioning system (1) includes an air conditioner (3), a management device (2), and a management server (4). The air conditioner (3) includes an auxiliary storage (33), an authentication information acquirer (300) to acquire authentication information from the management device (2) by sending identification information, which is information for identifying the air conditioner (3), to the management device (2) via a private network, and save the acquired authentication information in the auxiliary storage (33), and an authentication information presenter (301) to present, to the management server(4), the authentication information saved in the auxiliary storage (33), when accessing the management server (4) via a public network.

## Description

### Technical Field

The present disclosure relates to an air-conditioning system, an air conditioner, a management server, a method of providing authentication information, and a program.

### Background Art

In accordance with recent enhancement of the connection environment to public networks, such as the Internet, techniques have been developed that involve directly connecting apparatuses, such as air conditioners, to a public network, and monitoring and controlling the apparatuses at a remote server (for example, Patent Literature 1).

In these techniques, for example, when an air conditioner accesses the server via the public network, the air conditioner needs to preliminarily retain authentication information, such as a client certificate, dedicated to this air conditioner as a security measure.

### Citation List

### Patent Literature

Patent Literature 1: Unexamined Japanese Patent Application Publication No. 2020-008261

### Summary of Invention

### Technical Problem

Unfortunately, the task of presetting authentication information dedicated to each air conditioner in each air conditioner before shipment imposes a large burden on the manufacturer in terms of process complexity and information management. Although authentication information can also be preset in an air conditioner by an installer during installation of the air conditioner, this procedure requires a high task load and cannot readily achieve efficient information management. This problem should be solved by any significant technique that allows air conditioners to automatically acquire authentication information.

An objective of the present disclosure, which has been accomplished in view of the above situation, is to provide an air-conditioning system and the like that allow an air conditioner to automatically acquire authentication information, which is necessary to access a management server via a public network.

### Solution to Problem

In order to achieve the above objective, an air-conditioning system according to an aspect of the present disclosure includes an air conditioner, a management device, and a management server. The air conditioner includes an authentication information memory, authentication information acquisition means for acquiring authentication information from the management device by sending identification information, which is information for identifying the air conditioner, to the management device via a private network, and saving the acquired authentication information in the authentication information memory, and authentication information presentation means for presenting, to the management server, the authentication information saved in the authentication information memory, when accessing the management server via a public network.

### Advantageous Effects of Invention

The present disclosure allows the air conditioner to automatically acquire authentication information.

### Brief Description of Drawings

FIG. 1 illustrates an entire configuration of an air-conditioning system according to Embodiment 1;
FIG. 2 is a block diagram illustrating a hardware configuration of a management device according to Embodiment 1;
FIG. 3 is a block diagram illustrating a hardware configuration of an air conditioner according to Embodiment 1;
FIG. 4 is a block diagram illustrating a hardware configuration of a management server according to Embodiment 1;
FIG. 5 is a block diagram illustrating functional configurations of the management device, the air conditioner, and the management server according to Embodiment 1;
FIG. 6 is a diagram for describing an authentication information management table according to Embodiment 1;
FIG. 7 illustrates a flow of an authentication information providing process according to Embodiment 1;
FIG. 8 is a flowchart illustrating the steps of an authentication information management process according to Embodiment 1;
FIG. 9 illustrates an entire configuration of an air-conditioning system according to Embodiment 2; and
FIG. 10 is a block diagram illustrating functional configurations of a management device, an air conditioner, and a management server according to Embodiment 2.

### Description of Embodiments

Embodiments of the present disclosure are described in detail below with reference to the accompanying drawings.

### Embodiment 1

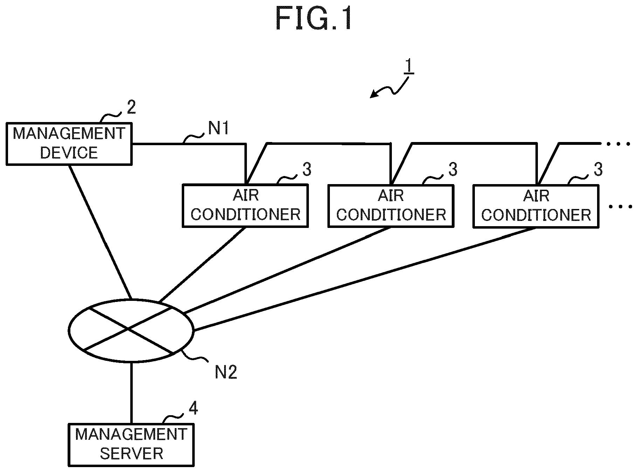

FIG. 1 illustrates an entire configuration of an air-conditioning system 1 according to Embodiment 1. The air-conditioning system 1 is a multi-air-conditioning system for a building to condition the air in a structure, such as office building, for example. The air-conditioning system 1 includes a management device 2, multiple air conditioners 3, and a management server 4.

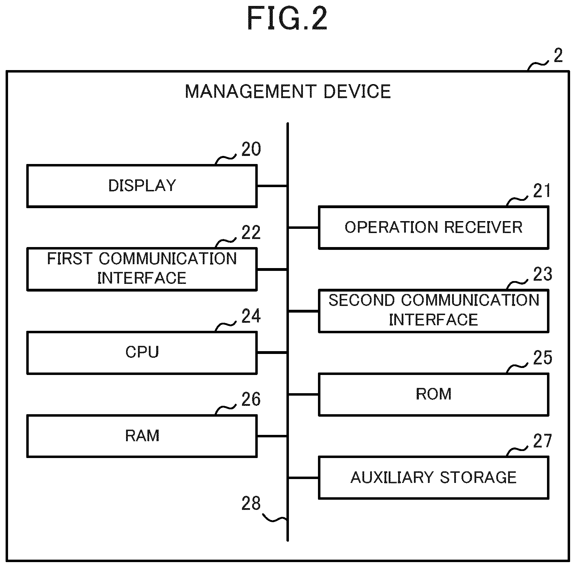

The management device 2 is responsible for centralized control of the air conditioners 3, and is installed in a place for staff only, such as a control room in the structure. As illustrated in FIG. 2, the management device 2 includes a display 20, an operation receiver 21, a first communication interface 22, a second communication interface 23, a central processing unit (CPU) 24, a read only memory (ROM) 25, a random access memory (RAM) 26, and an auxiliary storage 27. These components are connected to each other via buses 28.

The display 20 includes a display device, such as liquid crystal display, organic electroluminescence display, plasma display, or CRT display. The display 20 displays a monitoring screen for monitoring the operation state of the individual air conditioners 3, or an operation screen for controlling the individual air conditioners 3, for example, under the control of the CPU 24.

The operation receiver 21 includes at least one input device, such as keyboard, mouse, keypad, push button, touch panel, or touchpad, for example. The operation receiver 21 receives an input operation from a user, such as administrator, and outputs a signal associated with the received input operation to the CPU 24.

The first communication interface 22 is a hardware component for communication with each of the air conditioners 3 via a network N1. The network N1 is a private network, and is a well-known air-conditioning network in this embodiment.

The second communication interface 23 is a hardware component for communication with the management server 4 via a network N2. The network N2 is a public network, and is the Internet in this embodiment.

The CPU 24 is responsible for integrated control of the management device 2. Functions of the management device 2 that are achieved by the CPU 24 are described later in detail. The ROM 25 stores pieces of firmware and data used in execution of these pieces of firmware. The RAM 26 serves as a work area of the CPU 24.

The auxiliary storage 27 includes a readable-writable non-volatile semiconductor memory, such as electrically erasable programmable read-only memory (EEPROM) or flash memory, or a hard disk drive (HDD). The auxiliary storage 27 stores a program (hereinafter referred to as "management program") for management of the individual air conditioners 3 and data used in execution of this management program.

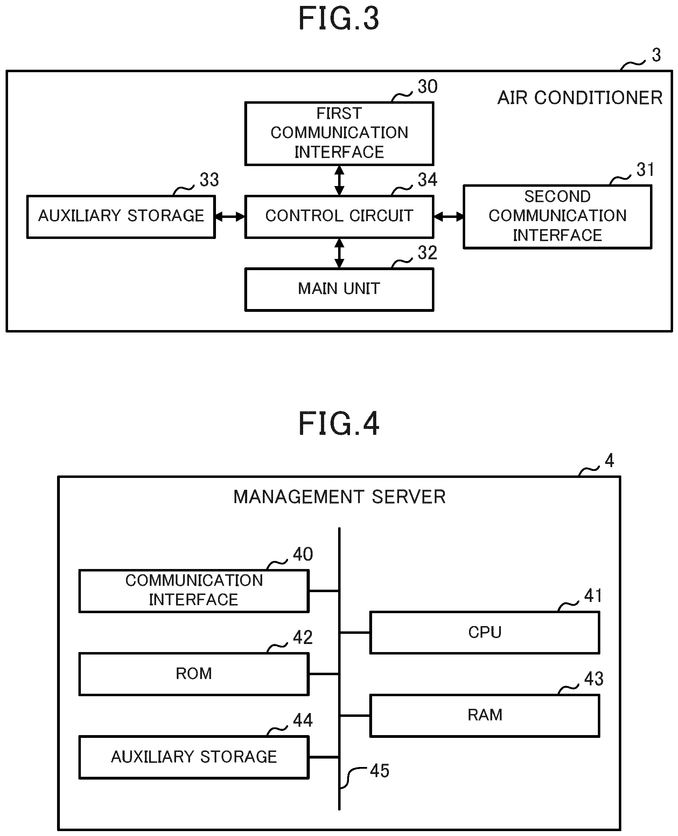

Each of the air conditioners 3 is an outdoor unit or indoor unit. As illustrated in FIG. 3, the air conditioner 3 includes a first communication interface 30, a second communication interface 31, a main unit 32, an auxiliary storage 33, and a control circuit 34. The first communication interface 30 is a hardware component for communication with the management device 2 and each of the other air conditioners 3 via the network N1. The second communication interface 31 is a hardware component for communication with the management server 4 via the network N2.

The main unit 32 is a component to achieve the original functions of a typical air conditioner. In an exemplary case where the air conditioner 3 is an outdoor unit, the main unit 32 includes a refrigerant circuit made of a compressor, a heat exchanger, an expansion valve, and a four-way valve, a fan, and various sensors. In another exemplary case where the air conditioner 3 is an indoor unit, the main unit 32 includes a filter, a fan, a louver, a heat exchanger, and various sensors.

The auxiliary storage 33 is an example of an authentication information memory. The auxiliary storage 33 includes a readable-writable non-volatile semiconductor memory, such as EEPROM or flash memory, for example. The auxiliary storage 33 stores a program (hereinafter referred to as "authentication information acquisition program") for acquisition of authentication information (described below) from the management device 2, and data used in execution of this authentication information acquisition program. In addition to these program and data, the auxiliary storage 33 also stores various programs including a program for data transmission and reception to and from the management device 2 and the management server 4, and a program for control of the operations of the main unit 32, and data used in execution of these programs.

The control circuit 34 includes elements, such as CPU, ROM, RAM, and readable-writable non-volatile semiconductor memory (none of these elements is illustrated in the figure), and performs integrated control of the air conditioner 3. Functions of the air conditioner 3 that are achieved by the control circuit 34 are described later in detail.

The management server 4 is a server computer installed and operated by a manufacturer, vender, or the like of the air conditioners 3, and is connected to the network N2. As illustrated in FIG. 4, the management server 4 includes a communication interface 40, a CPU 41, a ROM 42, a RAM 43, and an auxiliary storage 44. These components are connected to each other via buses 45.

The communication interface 40 is a hardware component for communication with the management device 2 and each of the air conditioners 3 via the network N2. The CPU 41 is responsible for integrated control of the management server 4. Functions of the management server 4 that are achieved by the CPU 41 are described later in detail. The ROM 42 stores pieces of firmware and data used in execution of these pieces of firmware. The RAM 43 serves as a work area of the CPU 41.

The auxiliary storage 44 includes a readable-writable non-volatile semiconductor memory, such as EEPROM or flash memory, or an HDD. The auxiliary storage 44 stores a program (hereinafter referred to as "remote management program") for remote management of the management device 2 and each of the air conditioners 3, and data used in execution of this remote management program.

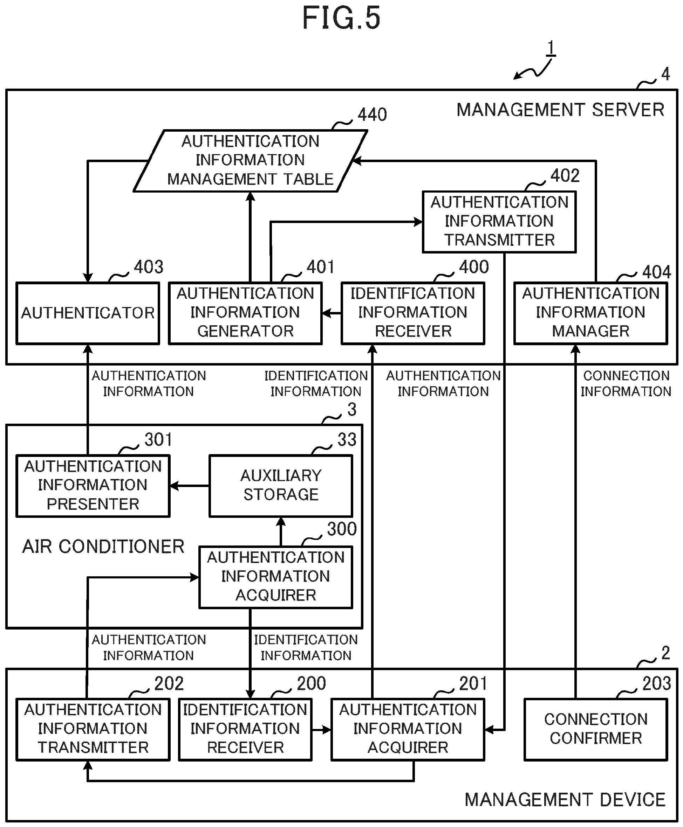

The individual functions of the management device 2, each of the air conditioners 3, and the management server 4 are described in detail below. FIG. 5 is a block diagram illustrating functional configurations of the management device 2, the air conditioner 3, and the management server 4. As illustrated in FIG. 5, the management device 2 includes an identification information receiver 200, an authentication information acquirer 201, an authentication information transmitter 202, and a connection confirmer 203. These functional components of the management device 2 are achieved because the CPU 24 executes the above-mentioned management program stored in the auxiliary storage 27.

The functions of the management device 2 illustrated in FIG. 5 are characteristic functions of the management device 2 according to this embodiment. In addition to these functions, the management device 2 also has general functions that existing management devices of this type have, for example, a function of periodically acquiring operation state from the individual air conditioners 3 to monitor the air conditioners 3, and a function of controlling the operations of the individual air conditioners 3, although description of these general functions is omitted herein.

As illustrated in FIG. 5, the air conditioner 3 includes an authentication information acquirer 300 and an authentication information presenter 301. These functional components of the air conditioner 3 are achieved because the CPU included in the control circuit 34 executes the above-mentioned authentication information acquisition program stored in the auxiliary storage 33.

In addition to the functions illustrated in FIG. 5, the air conditioner 3 also has general functions that existing air conditioners (outdoor units or indoor units) of this type have, although description of these general functions is omitted herein.

As illustrated in FIG. 5, the management server 4 includes an identification information receiver 400, an authentication information generator 401, an authentication information transmitter 402, an authenticator 403, and an authentication information manager 404. These functional components of the management server 4 are achieved because the CPU 41 executes the above-mentioned remote management program stored in the auxiliary storage 44.

The functions of the management server 4 illustrated in FIG. 5 are characteristic functions of the management server 4 according to this embodiment. In addition to these functions, the management server 4 also has general functions that existing management servers of this type have, for example, a function of periodically acquiring operation state from the individual air conditioners 3 to monitor the air conditioners 3, and a function of controlling the operations of the individual air conditioners 3, although description of these general functions is omitted herein.

The authentication information acquirer 300 in the air conditioner 3 is an example of authentication information acquisition means in an air conditioner. The authentication information acquirer 300 sends identification information, which is information for identifying the own apparatus (that is, this air conditioner 3), to the management device 2 via the network N1, and thereby acquires authentication information from the management device 2, and saves the acquired authentication information in the auxiliary storage 33. The identification information is, for example, a serial number, which was stored in the auxiliary storage 33 or the ROM included in the control circuit 34 by the manufacturer before shipment of this air conditioner 3, and retained in the air conditioner 3 in advance. Alternatively, the air conditioner 3 may include a security chip, which is not illustrated, which stores the identification information. The authentication information is information that is required when the air conditioner 3 gets authenticated by the management server 4 when accessing the management server 4 via the network N2. The authentication information is, for example, a client certificate.

When the air conditioner 3 is activated and connected to the network N1, the authentication information acquirer 300 determines whether authentication information has already been acquired. In detail, when the auxiliary storage 33 retains authentication information, the authentication information acquirer 300 determines that authentication information has already been acquired. In contrast, when the auxiliary storage 33 retains no authentication information, the authentication information acquirer 300 determines that authentication information has not been acquired. When determining that authentication information has not been acquired, the authentication information acquirer 300 sends the preset identification information to the management device 2 via the network N1. Thereafter, the authentication information acquirer 300 receives and acquires authentication information sent from the management device 2 via the network N1, and saves the acquired authentication information in the auxiliary storage 33.

In the management device 2, when receiving the identification information from the air conditioner 3, the identification information receiver 200 outputs the received identification information to the authentication information acquirer 201. The authentication information acquirer 201 is an example of authentication information acquisition means in a management device. The authentication information acquirer 201 sends the identification information, which is output from the identification information receiver 200, to the management server 4 via the network N2, and thereby acquires authentication information from the management server 4. The description assumes that a well-known secured communication, such as secure sockets layer (SSL) communication or transport layer security (TLS) communication, is established between the management device 2 and the management server 4, for example.

After the above-mentioned transmission of the identification information, the authentication information acquirer 201 receives and acquires authentication information sent from the management server 4 via the network N2. The authentication information acquirer 201 outputs the acquired authentication information to the authentication information transmitter 202. The authentication information transmitter 202 is an example of authentication information transmission means in the management device. The authentication information transmitter 202 sends the authentication information, which is output from the authentication information acquirer 201, via the network N1 to the corresponding air conditioner 3, that is, the air conditioner 3 from which the received identification information was sent.

In the management server 4, the identification information receiver 400 receives the identification information sent from the management device 2 via the network N2, and outputs the received identification information to the authentication information generator 401. The authentication information generator 401 is an example of authentication information generation means in a management server. In response to output of the identification information from the identification information receiver 400, the authentication information generator 401 generates authentication information dedicated to the air conditioner 3 corresponding to this identification information, on the basis of the identification information. The generated authentication information includes, in a recognizable manner, the identification information for identifying this air conditioner 3. The authentication information generator 401 outputs the generated authentication information to the authentication information transmitter 402. The authentication information generator 401 also registers a record based on this identification information and the generated authentication information, in an authentication information management table 440.

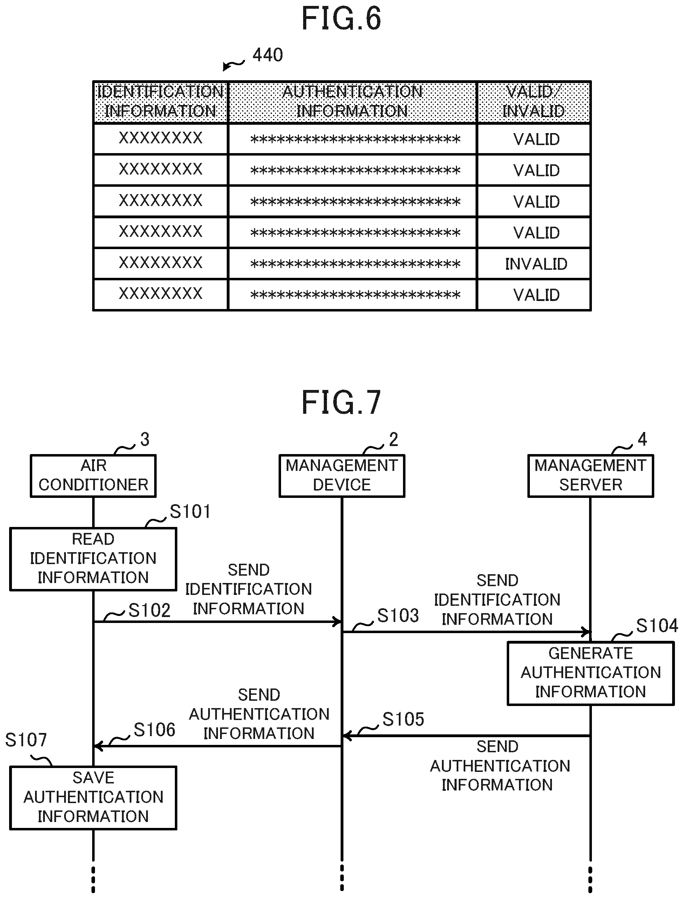

The authentication information management table 440 is a data table for management of authentication information provided to the air conditioner 3, and is stored in the auxiliary storage 44. As illustrated in FIG. 6, the authentication information management table 440 includes records each made of a field "identification information", a field "authentication information", and a field "valid/invalid". The field "identification information" includes identification information for identifying each air conditioner 3, and a field "authentication information" includes authentication information provided to this air conditioner 3.

The field "valid/invalid" includes information indicating whether this authentication information is valid or invalid. In this embodiment, when the air conditioner 3 is connected to the network N1, authentication information on this air conditioner 3 is deemed to be valid, so that the field "valid/invalid" includes information (hereinafter referred to as information "valid") indicating that this authentication information is valid. In contrast, when the air conditioner 3 is not connected to the network N1, authentication information on this air conditioner 3 is deemed to be invalid, so that the field "valid/invalid" includes information (hereinafter referred to as information "invalid") indicating that this authentication information is invalid. The field "valid/invalid" of a record newly registered in the authentication information management table 440 includes information "valid" set by the authentication information generator 401.

The authentication information transmitter 402 is an example of authentication information transmission means in the management server. The authentication information transmitter 402 sends the authentication information, which is output from the authentication information generator 401, to the management device 2 via the network N2.

The authentication information presenter 301 in the air conditioner 3 is an example of authentication information presentation means. When the air conditioner 3 accesses the management server 4 via the network N2, the authentication information presenter 301 reads authentication information stored in the auxiliary storage 33 and presents the read authentication information to the management server 4. The authenticator 403 of the management server 4 determines whether the air conditioner 3 is an authorized apparatus, on the basis of the authentication information presented by the air conditioner 3 and the authentication information management table 440. Only when the presented authentication information is identical to the authentication information provided to this air conditioner 3 and is valid, the authenticator 403 of the management server 4 determines that this air conditioner 3 is an authorized apparatus.

In contrast, when the above-mentioned conditions are not satisfied, the authenticator 403 determines that the air conditioner 3 is an unauthorized apparatus. When the authenticator 403 determines that this air conditioner 3 is an unauthorized apparatus, the management server 4 stops the future communication with this air conditioner 3. That is, the management server 4 never performs ordinary data transmission or reception to or from the air conditioner 3 determined to be an unauthorized apparatus.

The authentication information manager 404 in the management server 4 is an example of authentication information management means. The authentication information manager 404 requests the management device 2 to confirm the status of connection of each of the air conditioners 3 periodically (for example, in one-hour periods). In detail, the authentication information manager 404 sends data (hereinafter referred to as "confirmation requesting data") for requesting confirmation of the status of connection of each of the air conditioners 3, to the management device 2 via the network N2.

The connection confirmer 203 of the management device 2, which receives the above-mentioned confirmation requesting data, confirms the statuses of connection of all the management-target air conditioners 3 to the network N1 (that is, whether the air conditioners 3 are connected to the network N1). The connection confirmer 203 then sends connection information, including the identification information and the status of connection, on each of the air conditioners 3, to the management server 4 via the network N2.

In response to reception of the connection information sent from the management device 2, the authentication information manager 404 determines whether the authentication information on each of the air conditioners 3 is valid or invalid, on the basis of the status of connection of each of the air conditioners 3 to the network N1. In detail, the authentication information manager 404 determines the authentication information on the air conditioner 3 connected to the network N1 to be valid, and determines authentication information on the air conditioner 3 not connected to the network N1 to be invalid.

The authentication information manager 404 causes a result of determination to be reflected in the authentication information management table 440. In an exemplary case where the field "valid/invalid" in the authentication information management table 440 includes information "invalid" for the air conditioner 3 on which authentication information is currently determined to be valid, the authentication information manager 404 sets information "valid" in this field "valid/invalid".

In another exemplary case where the field "valid/invalid" in the authentication information management table 440 includes information "valid" for the air conditioner 3 on which authentication information is currently determined to be invalid, the authentication information manager 404 sets information "invalid" in this field "valid/invalid".

The management device 2 may spontaneously send the connection information, including the identification information and the current status of connection, on each of the management-target air conditioners 3, to the management server 4 via the network N2 periodically (for example, in one-hour periods). Alternatively, the management device 2 may confirm the status of connection of each of the management-target air conditioners 3 periodically (for example, in one-minute periods), and may send the connection information, including the identification information and the current status of connection, on this air conditioner 3 to the management server 4 via the network N2, in response to detection of any variation from the previous status of connection.

FIG. 7 illustrates a flow of an authentication information providing process executed in the air-conditioning system 1. When the air conditioner 3 in the power-on state is connected to the network N1, the air conditioner 3 determines whether authentication information has already been acquired. When determining that authentication information has not been acquired, the air conditioner 3 reads identification information from the auxiliary storage 33, the ROM of the control circuit 34, or the security chip (Step S101).

The air conditioner 3 then sends the read identification information to the management device 2 via the network N1 (Step S 102). When receiving the identification information sent from the air conditioner 3, the management device 2 sends the received identification information to the management server 4 via the network N2 (Step S 103).

When receiving the identification information sent from the management device 2, the management server 4 generates authentication information dedicated to the air conditioner 3 corresponding to this identification information (Step S 104). The management server 4 then registers a record based on this identification information and the generated authentication information in the authentication information management table 440, and also sends the generated authentication information to the management device 2 via the network N2 (Step S105).

When receiving the authentication information sent from the management server 4, the management device 2 sends the received authentication information via the network N1 to the corresponding air conditioner 3, that is, the air conditioner 3 from which the received identification information was sent (Step S106).

When receiving the authentication information sent from the management device 2, the air conditioner 3 saves the received authentication information in the auxiliary storage 33 (Step S107).

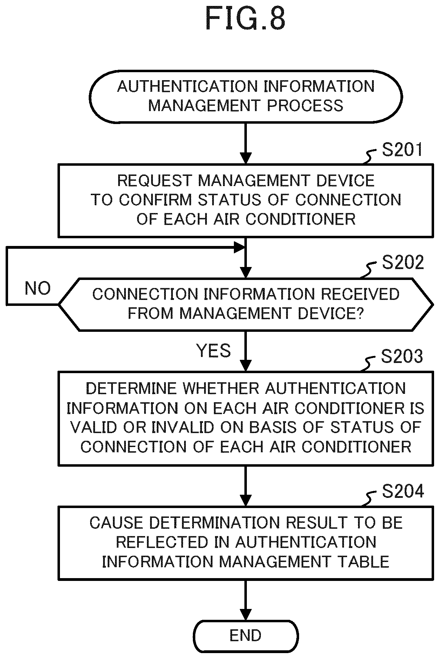

FIG. 8 is a flowchart illustrating the steps of an authentication information management process executed in the management server 4. The management server 4 repeats the authentication information management process periodically (for example, in one-hour periods). First, the management server 4 requests the management device 2 to confirm the status of connection of each of the air conditioners 3 (Step S201).

In response to the above-mentioned request from the management server 4, the management device 2 confirms the statuses of connection of all the management-target air conditioners 3 to the network N1. The management device 2 then sends connection information, including the identification information and the status of connection, on each of the air conditioners 3 to the management server 4 via the network N2.

When the management server 4 receives the connection information sent from the management device 2 (Step S202; YES), the management server 4 determines whether authentication information on each of the air conditioners 3 is valid or invalid, on the basis of the status of connection of each of the air conditioners 3 to the network N1 (Step S203). The management server 4 then causes a result of determination to be reflected in the authentication information management table 440 (Step S204).

As described above, in the air-conditioning system 1 according to Embodiment 1, the air conditioner 3 can automatically acquire authentication information during operation. That is, at the initial connection to the network N1, which is a private network, the air conditioner 3 sends the own identification information to the management device 2 via the network N1. The management device 2 sends the identification information received from the air conditioner 3 to the management server 4. When receiving the identification information from the management device 2, the management server 4 generates authentication information dedicated to this air conditioner 3 and sends the generated authentication information to the management device 2. When receiving the authentication information from the management server 4, the management device 2 sends the received authentication information to this air conditioner 3 via the network N1. When receiving the authentication information from the management device 2, the air conditioner 3 saves the received authentication information in the auxiliary storage 33.

This configuration thus does not need a process of presetting authentication information, which is dedicated to each of the air conditioners 3, in the air conditioner 3 before shipment, and does not require an installer to preset authentication information in an air conditioner 3 during installation of the air conditioner 3. The configuration only requires presetting of identification information in each of the air conditioners 3 before shipment, and can therefore reduce the tasks for information management in comparison to those in the case of presetting authentication information before shipment.

The authentication information is sent from the management device 2 to the air conditioner 3 via the network N1, which is a private network, without an unsecured communication channel. This configuration can ensure the confidentiality of the authentication information.

The air conditioner 3 sends the own identification information to the management device 2 via the network N1 at the initial connection to the network N1, and thereby acquires, via the management device 2, authentication information newly issued by the management server 4. This configuration can facilitate, in exchanging the existing air conditioner 3 for another air conditioner 3, provision of new authentication information to the air conditioner 3 without any problem or inconvenience.

The management server 4 issues authentication information and performs centralized management of the issued authentication information. This configuration can achieve efficient management of authentication information.

The process of acquiring authentication information at the air conditioner 3 does not accompany transmission of a large amount of information via the network N1, and thus communication loads do not increase, resulting in no trouble in ordinary operations.

The management server 4 invalidates authentication information on the air conditioner 3 disconnected from the network N1, and revalidates the authentication information on this air conditioner 3 when the air conditioner 3 is connected to the network N1 again. This configuration can prevent so-called masquerading, that is, an unauthorized access to the management server 4 by an apparatus in which illegally acquired authentication information is preset.

### Embodiment 2

The following description is directed to Embodiment 2 of the present disclosure. The component or the like in the following description common to that in Embodiment 1 is provided with the same reference symbol, and description thereof is omitted.

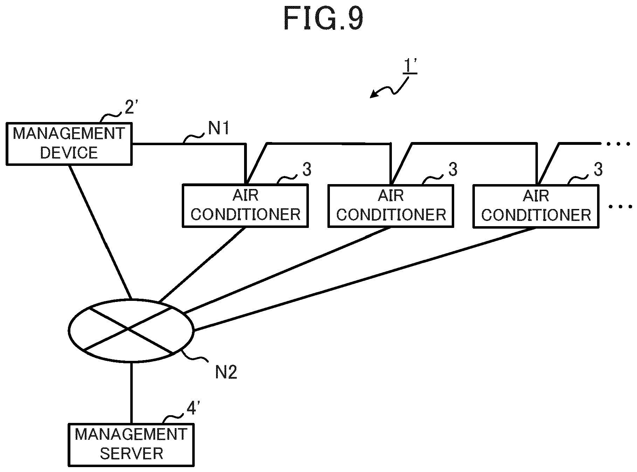

FIG. 9 illustrates an entire configuration of an air-conditioning system 1' according to Embodiment 2. The air-conditioning system 1' is a multi-air-conditioning system for a building to condition the air in a structure, such as office building, for example. The air-conditioning system 1' includes a management device 2', multiple air conditioners 3, and a management server 4'.

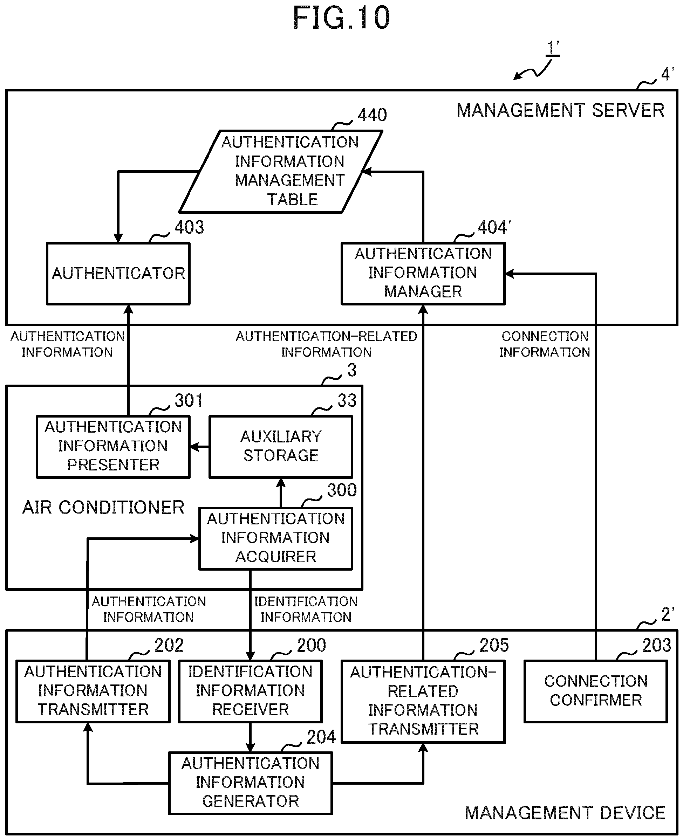

The management device 2' has the hardware configuration similar to that of the management device 2 according to Embodiment 1 (refer to FIG. 2), and the management server 4' has the hardware configuration similar to that of the management server 4 according to Embodiment 1 (refer to FIG. 4). The management device 2' and the management server 4', however, have functional configurations different from those of the management device 2 and the management server 4 according to Embodiment 1 (refer to FIG. 5). The air-conditioning system 1' according to this embodiment differs from the air-conditioning system 1 according to Embodiment 1, in that not the management server 4' but the management device 2' generates and provides authentication information on the air conditioner 3. This difference is described in detail below with reference to FIG. 10.

FIG. 10 is a block diagram illustrating functional configurations of the management device 2', the air conditioner 3, and the management server 4'. As illustrated in FIG. 10, the management device 2' includes an identification information receiver 200, an authentication information transmitter 202, a connection confirmer 203, an authentication information generator 204, and an authentication-related information transmitter 205. These functional components of the management device 2' are achieved because the CPU 24 of the management device 2' executes a management program for management of each of the air conditioners 3, which is stored in the auxiliary storage 27.

The functions of the management device 2' illustrated in FIG. 10 are characteristic functions of the management device 2' according to this embodiment. In addition to these functions, the management device 2' also has general functions that existing management devices of this type have, for example, a function of periodically acquiring operation state from the individual air conditioners 3 to monitor the air conditioners 3, and a function of controlling the operations of the individual air conditioners 3, although description of these general functions is omitted herein.

As illustrated in FIG. 10, the management server 4' includes an authenticator 403 and an authentication information manager 404'. These functional components of the management server 4' are achieved because the CPU 41 of the management server 4' executes a remote management program for remote management of the management device 2' and the individual air conditioners 3, which is stored in the auxiliary storage 44.

The functions of the management server 4' illustrated in FIG. 10 are characteristic functions of the management server 4' according to this embodiment. In addition to these functions, the management server 4' also has general functions that existing management servers of this type have, for example, a function of periodically acquiring operation state from the individual air conditioners 3 to monitor the air conditioners 3, and a function of controlling the operations of the individual air conditioners 3, although description of these general functions is omitted herein.

The authentication information generator 204 in the management device 2' is an example of authentication information generation means in the management device. When the identification information receiver 200 receives identification information sent from the air conditioner 3, the authentication information generator 204 generates authentication information dedicated to the air conditioner 3 corresponding to this identification information, on the basis of the identification information. The generated authentication information includes, in a recognizable manner, the identification information for identifying this air conditioner 3. The authentication information generator 204 outputs the generated authentication information to the authentication information transmitter 202. The authentication information transmitter 202 sends the authentication information, which is output from the authentication information generator 204, via the network N1 to the corresponding air conditioner 3, that is, the air conditioner 3 from which the received identification information was sent.

The authentication information generator 204 also outputs the identification information and the generated authentication information to the authentication-related information transmitter 205. The authentication-related information transmitter 205 is an example of authentication-related information transmission means. The authentication-related information transmitter 205 generates authentication-related information including the identification information and the authentication information, which are output from the authentication information generator 204, and sends the generated authentication-related information to the management server 4' via the network N2.

The authentication information manager 404' in the management server 4' is an example of authentication information management means. When receiving the authentication-related information sent from the management device 2', the authentication information manager 404' extracts the identification information and the authentication information from the received authentication-related information. The authentication information manager 404' registers a record based on the extracted identification information and authentication information in the authentication information management table 440.

The authentication information manager 404' sends confirmation requesting data for requesting the management device 2' to confirm the status of connection of each of the air conditioners 3, to the management device 2' via the network N2 periodically (for example, in one-hour periods), like the authentication information manager 404 according to Embodiment 1. The authentication information manager 404' then receives connection information, which is sent from the management device 2' in response to the confirmation requesting data. The authentication information manager 404' then determines whether the authentication information on each of the air conditioners 3 is valid or invalid, on the basis of the status of connection of each of the air conditioners 3 to the network N1, and causes a result of determination to be reflected in the authentication information management table 440.

The connection confirmer 203 of the management device 2', the functional configuration of the air conditioner 3, and the authenticator 403 of the management server 4' are identical to those in Embodiment 1, and thus description thereof is omitted.

As described above, in the air-conditioning system 1' according to Embodiment 2, the air conditioner 3 can automatically acquire authentication information during operation. That is, at the initial connection to the network N1, which is a private network, the air conditioner 3 sends the own identification information to the management device 2' via the network N1. When receiving the identification information from the air conditioner 3, the management device 2' generates authentication information dedicated to this air conditioner 3 and sends the generated authentication information to the air conditioner 3 via the network N1. When receiving the authentication information from the management device 2', the air conditioner 3 saves the received authentication information in the auxiliary storage 33.

This configuration thus does not need a process of presetting authentication information, which is dedicated to each of the air conditioners 3, in the air conditioner 3 before shipment, and does not require an installer to preset authentication information in an air conditioner 3 during installation of the air conditioner 3. The configuration only requires presetting of identification information in each of the air conditioners 3 before shipment, and can therefore reduce the tasks for information management in comparison to those in the case of presetting authentication information before shipment.

The authentication information is sent from the management device 2' to the air conditioner 3 via the network N1, which is a private network, without an unsecured communication channel. This configuration can ensure the confidentiality of the authentication information.

The air conditioner 3 sends the own identification information to the management device 2' via the network N1 at the initial connection to the network N1, and thereby acquires, from the management device 2', authentication information newly issued by the management device 2'. This configuration can facilitate, in exchanging the existing air conditioner 3 for another air conditioner 3, provision of new authentication information to the air conditioner 3 without any problem or inconvenience.

The management server 4' performs centralized management of the authentication information issued by the management device 2'. This configuration can achieve efficient management of authentication information.

The process of acquiring authentication information at the air conditioner 3 does not accompany transmission of a large amount of information via the network N1, and thus communication loads do not increase, resulting in no trouble in ordinary operations.

The management server 4' invalidates authentication information on the air conditioner 3 disconnected from the network N1, and revalidates the authentication information on this air conditioner 3 when the air conditioner 3 is connected to the network N1 again. This configuration can prevent so-called masquerading, that is, an unauthorized access to the management server 4' by an apparatus in which illegally acquired authentication information is preset.

The above-described embodiments are not to be construed as limiting the scope of the disclosure and are certainly allowed to be subject to various modifications within the gist of the disclosure.

For example, the air conditioner may acquire a one-time password from the management device, and acquire authentication information from the management server using the acquired one-time password. In this case, the air conditioner sends the own identification information to the management device via an air-conditioning network at the initial connection to the air-conditioning network. When receiving the identification information sent from the air conditioner, the management device issues a one-time password and sends the issued one-time password to this air conditioner via the air-conditioning network. The air conditioner sends the acquired one-time password to the management server via a public network, and thereby acquires authentication information from the management server.

All or part of the functional components of the management devices 2 and 2' (refer to FIGS. 5 and 10) may be achieved by dedicated hardware, all or part of the functional components of the air conditioner 3 (refer to FIG. 5) may be achieved by dedicated hardware, or all or part of the functional components of the management servers 4 and 4' (refer to FIGS. 5 and 10) may be achieved by dedicated hardware. Examples of the dedicated hardware include a single circuit, a combined circuit, a programmed processor, an application specific integrated circuit (ASIC), a field-programmable gate array (FPGA), and combinations thereof.

In the above-described embodiments, the management programs executed in the management devices 2 and 2', the authentication information acquisition program executed in the air conditioner 3, and the remote management programs executed in the management servers 4 and 4' may be stored in a non-transitory computer-readable recording medium, such as a compact disc read only memory (CD-ROM), a digital versatile disc (DVD), a magneto-optical disc, a USB memory, a memory card, or an HDD, and distributed.

Each of these programs may also be stored in a storage included in a server, which is not illustrated, on the Internet, and downloaded from the server into the corresponding one of the management devices 2 and 2', the air conditioner 3, and the management servers 4 and 4'.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can be appropriately applied to an air-conditioning system for conditioning the air in a structure.

### Reference Signs List

- 1, 1': Air-conditioning system
- 2, 2': Management device
- 3: Air conditioner
- 4, 4': Management server
- 20: Display
- 21: Operation receiver
- 22, 30: First communication interface
- 23, 31: Second communication interface
- 24,41: CPU
- 25, 42: ROM
- 26, 43: RAM
- 27, 33, 44: Auxiliary storage
- 28, 45: Bus
- 32: Main unit
- 34: Control circuit
- 40: Communication interface
- 200, 400: Identification information receiver
- 201, 300: Authentication information acquirer
- 202: Authentication information transmitter
- 203: Connection confirmer
- 204, 401: Authentication information generator
- 205: Authentication-related information transmitter
- 301: Authentication information presenter
- 402: Authentication information transmitter
- 403: Authenticator
- 404, 404': Authentication information manager
- 440: Authentication information management table

## Claims

1. An air-conditioning system, comprising:
an air conditioner;
a management device; and
a management server, wherein
the air conditioner comprises
an authentication information memory,
authentication information acquisition means for acquiring authentication information from the management device by sending identification information to the management device via a private network, and saving the acquired authentication information in the authentication information memory, the identification information being information for identifying the air conditioner, and
authentication information presentation means for presenting, to the management server, the authentication information saved in the authentication information memory, when accessing the management server via a public network.

2. The air-conditioning system according to claim 1, wherein when the air conditioner is connected to the private network while no authentication information is saved in the authentication information memory, the air conditioner sends the identification information to the management device via the private network.

3. The air-conditioning system according to claim 1 or 2, wherein
the management device comprises
authentication information acquisition means for acquiring the authentication information from the management server by sending the identification information for identifying the air conditioner to the management server via the public network, the identification information being received via the private network, and
authentication information transmission means for sending the acquired authentication information to the air conditioner via the private network, and
the management server comprises
authentication information generation means for generating authentication information dedicated to the air conditioner in response to reception of the identification information via the public network, and
authentication information transmission means for sending the generated authentication information to the management device via the public network.

4. The air-conditioning system according to claim 1 or 2, wherein
the management device comprises
authentication information generation means for generating authentication information dedicated to the air conditioner in response to reception of the identification information for identifying the air conditioner via the private network,
authentication information transmission means for sending the generated authentication information to the air conditioner via the private network, and
authentication-related information transmission means for sending authentication-related information to the management server via the public network, the authentication-related information including the identification information and the generated authentication information.

5. The air-conditioning system according to any one of claims 1 to 4, wherein the management server comprises authentication information management means for determining whether the authentication information is valid or invalid, on basis of a status of connection of the air conditioner to the private network.

6. An air conditioner, comprising:
an authentication information memory;
authentication information acquisition means for acquiring authentication information from a management device by sending identification information to the management device via a private network, and saving the acquired authentication information in the authentication information memory, the identification information being information for identifying the air conditioner; and
authentication information presentation means for presenting, to a management server, the authentication information saved in the authentication information memory, when accessing the management server via a public network.

7. A management server, comprising:
authentication information generation means for generating authentication information dedicated to an air conditioner in response to reception of identification information sent from a management device via a public network, the identification information being information for identifying the air conditioner; and
authentication information transmission means for sending the generated authentication information to the management device via the public network.

8. A method of providing authentication information, the method comprising:
sending, by an air conditioner, identification information to a management device via a private network, the identification information being information for identifying the air conditioner;
sending, by the management device, the identification information to a management server via a public network, the identification information being received from the air conditioner;
generating, by the management server, in response to reception of the identification information from the management device, authentication information dedicated to the air conditioner and sending, by the management server, the generated authentication information to the management device via the public network;
sending, by the management device, the authentication information to the air conditioner via the private network, the authentication information being received from the management server; and
saving, by the air conditioner, the authentication information in an authentication information memory, the authentication information being received from the management device.

9. A program causing a computer to function as:
authentication information generation means for generating authentication information dedicated to an air conditioner in response to reception of identification information sent from a management device via a public network, the identification information being information for identifying the air conditioner; and
authentication information transmission means for sending the generated authentication information to the management device via the public network.
